# EUROPEAN PATENT APPLICATION

(11) **EP 1 361 692 A2**
(43) Date of publication of application: **12.11.2003**
(21) Application number: 03009785.1
(22) Date of filing: 09.05.2003
(51) Int. Cl.: H04L 9/00, H04L 9/06, H04L 29/06

(54) **Encryption/decryption system and encryption/decryption method**

(30) Priority: 09.05.2002 JP 2002134170
(71) Applicant: NEC CORPORATION, Tokyo (JP)
(72) Inventor: Sugiura, Atsuko, Minato-ku, Tokyo (JP)
(74) Representative: VOSSIUS & PARTNER

(57) **Abstract**

An encryption/decryption system (116) encrypts/decrypts digital data (21) including pairs of header information (HD) and a data body (PD). The system (116) includes an encryption work key generation unit (101, 102), an encryption unit (104), a decryption work key generation unit (106, 107), and a decryption unit (108). The encryption work key generation unit (101, 102) generates an encryption work key (WK) based on the header information (HD) for each data body. The encryption unit (104) encrypts each data body (PD) using a corresponding encryption work key. The decryption work key generation unit (106, 107) generates decryption work key (WK) for each data body based on the corresponding header information (HD). The decryption unit (108) decrypts the encrypted data body (EPD) of the encrypted digital data using a corresponding decryption work key (WK), and reproduce the digital data (21).

## Description

The present invention relates to an encryption/decryption system used for storing and reproducing digital data of, for example, music and videos. The present invention also relates to a code decipherment prevention/falsification prevention system for rendering code decipherment difficult, and for rendering falsified data difficult to use.

When digital data of, for example, music and videos is stored and reproduced, a data encryption technique is used from the viewpoint of copyright protection. Unexamined Japanese Patent Application KOKAI Publication No. H10-290222 discloses a technique for encrypting and sending digital data to a storage device, and for decrypting encrypted data read out from the storage.

However, according to the technique, its encryption algorithm may be revealed by analyzing a mass of the encrypted digital data. Once the encryption algorithm is known by an unauthorized third party, the encrypted data is easily decrypted by the third party.

In view of the above problem, an object of the present invention is to provide an encryption/decryption system and method for rendering code decipherment difficult and rendering falsification difficult.

Another object of the present invention is to provide an encryption system and method which can prevent unauthorized copying/falsifying.

To achieve the above object, an encryption/decryption system according to a first aspect of the present invention is an encryption/decryption system for encrypting/decrypting digital data (21) including header information (HD) and a data body (PD), the system comprising:
an encryption work key generation unit (101, 102) which generates an encryption work key (WK) based on the header information (HD) of the digital data (21);
an encryption unit (104) which, as to the digital data (21), encrypts the data body (PD), using the encryption work keys, and outputs the digital data;
a decryption work key generation unit (106, 107) which generates a decryption work key (WK) based on the header information (HD) of the digital data (21) encrypted by the encryption unit (104); and
a decryption unit (108) which, as to the digital data (24) encrypted by the encryption unit (104), decrypts the encrypted data body (EPD) using the decryption work key (WK), in order to reproduce the digital data (21) including the decrypted data body (PD) and the corresponding header information (HD).

The digital data (21) may be data made up of a series of a plurality of data blocks (D) each including header information (HD) and a data body (PD), and the header information (HD) may be unique to each data block (D),
said encryption work key generation unit (101, 102) generates an encryption work key (WK) for each data block based on the header information (HD) of the data block;
said encryption unit (104) encrypts the data body (PD) of each data block, using the encryption work key generated for the data block;
said decryption work key generation unit (106, 107) generates the decryption work key (WK) for each data block based on the header information (HD) of the encrypted data block; and
said decryption unit (108) decrypts the encrypted data body (EPD) of each data block using the decryption work key (WK) for the data block.

The encryption work key generation unit (101, 102) may generate the encryption work key using all or a part of the header information extracted from the digital data (21) and a master key, and the decryption work key generation unit (106, 107) may generate the decryption work key using all or the part of the header information extracted from the encrypted digital data and the master key.

The master key may be unique to each the encryption/decryption system.

The encryption work key generation unit (101, 102) and the decryption work key generation unit (106, 107) may respectively generate the work keys by obtaining an exclusive or of the master key and the header information.

The digital data (21) may be data made up of a series of data blocks (D) each including header information (HD) and a data body (PD), the system may further comprise a filter (202) which receives the digital data (21), extracts data blocks of a specific program based on the header information, and outputs the extracted data blocks, the encryption work key generation unit (101A, 102) may extract the header information (HD) of the data block extracted by the filter (202), and generate the encryption work key (WK) based on the extracted header information, and the encryption block (104) may encrypt the data block (D) extracted by the filter (202).

The digital data (71) may be data based on MPEG and made up of a series of transport packets each including header information and a payload, the system may further comprise a filter (202) which receives the digital data (71), extracts transport packets of a specific program based on the header information (HD), and outputs the extracted transport packets, the encryption work key generation unit (101A, 102) may extract the header information (HD) of the transport packets extracted by the filter (202), and generate encryption work keys (WK) based on the extracted header information (HD), and the encryption unit (104) may encrypt the transport packet extracted by the filter (202).

The header information (HD) may include PID header information containing information regarding a program number, and CC header information containing a cyclic count value which is changed in accordance with an order of transport packets to confirm continuation of transport packets, and the encryption work key generation unit (101A, 102) may generate the encryption work keys based on at least the PID header information and the CC header information.

The encryption/decryption system may comprise an encryption range determination unit (203) which designates a range of data that should be encrypted, and notifies the designated range to the encryption unit (104) and the decryption unit (108).

The encryption/decryption system may comprise a range determination unit (203) which designates a range used for generating the work keys, and notifies the designated range to the encryption work key generation unit (101, 102) and the decryption work key generation unit (106, 107).

The encryption unit (104) may output the header information (HD) of the digital data (24) as it is, encrypts the data body (EPD) using the encryption work key (WK) and outputs the encrypted data body, and thereby generate encrypted data including the original header information and the encrypted data body, and the decryption unit (108) may output the header information (HD) of the encrypted digital data (24) as it is, decrypt the encrypted data body (EPD) using the decryption work keys (WK) and output the decrypted data body, and thereby reproduce the original digital data.

To achieve the above object, an encryption system according to a second aspect of the present invention is an encryption system for encrypting digital data (21) including header information (HD) and a data body (PD), the system comprising:
an encryption work key generation unit (101, 102) which generates an encryption work key based on the header information (HD) of the digital data (21); and
an encryption unit (104) which, as to the digital data (21), encrypts the data body (PD) using the encryption work key, and outputs the digital data.

The digital data (21) may be data made up of a series of a plurality of data blocks (D) each including header information (HD) and a data body (PD), and the header information (HD) may be unique to each data block (D), said encryption work key generation unit (101, 102) generates an encryption work key (WK) for each data block based on the header information (HD) of the data block; and said encryption unit (104) encrypts the data body (PD) of each data block using the encryption work key generated for the data block.

The encryption work key generation unit (101, 102) may generate the encryption work key using all or a part of the header information extracted from the digital data (21) and a master key.

The master key may be unique to each the encryption system.

The encryption work key generation unit (101, 102) may generate the work keys by obtaining an exclusive or of the master key and the header information.

The digital data (21) may be data made up of a series of data blocks (D) each including header information (HD) and a data body (PD), the system may further comprise a filter (202) which receives the digital data (21), extracts data blocks of a specific program based on the header information, and outputs the extracted data blocks, the encryption work key generation unit (101A, 102) may extract the header information (HD) of the data block extracted by the filter (202), and generate the encryption work key (WK) based on the extracted header information, and the encryption block (104) may encrypt the data block (D) extracted by the filter (202).

The digital data (71) may be data based on MPEG and made up of a series of transport packets each including header information and a payload, the system may further comprise a filter (202) which receives the digital data (71), extracts transport packets of a specific program based on the header information (HD), and outputs the extracted transport packets, the encryption work key generation unit (101A, 102) may extract the header information (HD) of the transport packets extracted by the filter (202), and generate encryption work keys (WK) based on the extracted header information (HD), and the encryption unit (104) may encrypt the transport packets extracted by the filter (202).

The header information (HD) may include PID header information containing information regarding a program number, and CC header information containing a cyclic count value which is changed in accordance with an order of transport packets to confirm continuation of transport packets, and the encryption work key generation unit (101A, 102) may generate the encryption work keys based on at least the PID header information and the CC header information.

The encryption system may comprise an encryption range determination unit (203) which designates a range of data that should be encrypted, and notifies the designated range to the encryption unit (104).

The encryption system may comprise a range determination unit (203) which designates a range used for generating the work key, and notifies the designated range to the encryption work key generation unit (101, 102).

The encryption unit (104) may simply output the header information (HD) of the digital data (24), output the data body (EPD) by encrypting it using the encryption work keys (WK), and thereby generate encrypted data including the original header information and the encrypted data body.

To achieve the above object, a decryption system according to a third aspect of the present invention is a decryption system for decrypting encrypted data of digital data (21) including header information (HD) and a data body (PD), comprising:
a decryption work key generation unit (106, 107) which generates a decryption work key (WK) based on the header information (HD) of the encrypted digital data (21); and
a decryption unit (108) which, as to the encrypted digital data (24), decrypts the data body (EPD) which is encrypted, using the decryption work key (WK), in order to reproduce the digital data (21) including the decrypted data body (PD) and the corresponding header information (HD).

The digital data (21) may be data made up of a series of a plurality of data blocks (D) each including header information (HD) and a data body (PD), and the header information (HD) may be unique to each data block (D), said decryption work key generation unit (106, 107) generates the decryption work key (WK) for each data block based on the header information (HD) of the encrypted data block; and said decryption unit (108) decrypts the encrypted data body (EPD) of each data block using the decryption work key (WK) for the data block.

The decryption work key generation unit (106, 107) may generate the decryption work key using all or a part of the header information extracted from the encrypted digital data and a master key.

The master key may be unique to each the decryption system.

The decryption work key generation unit (106, 107) may generate the work keys by obtaining an exclusive or of the master key and the header information.

The decryption system may comprise a decryption range determination unit (203) which designates a range of data that should be decrypted, and notifies the designated range to the decryption unit (108).

The decryption system may comprise a range determination unit (203) which designates a range used for generating the work keys, and notifies the designated range to the decryption work key generation unit (106, 107).

The decryption unit (108) may output the header information (HD) of the encrypted digital data (24) as it is, decrypt the encrypted data body (EPD) using the decryption work keys (WK) and outputs the decrypted data body, and thereby reproduce the original digital data.

To achieve the above object, an encryption method according to a fourth aspect of the present invention is a method of encrypting digital data (21) including header information (HD) and a data body (PD), the method comprising:
generating an encryption work key (WK) based on the header information (HD) of the digital data (21); and
encrypting, as to the digital data (21), the data body (PD) using the encryption work key, and outputting the digital data.

To achieve the above object, a computer program according to a fifth aspect of the present invention is a program for controlling a computer to execute the above-described encryption method.

To achieve the above object, a decryption method according to a sixth aspect of the present invention is a method of decrypting encrypted data of digital data (21) including header information (HD) and a data body (PD), the method comprising:
generating decryption work keys (WK) based on the header information (HD) of the encrypted digital data (21); and
decrypting, as to the encrypted digital data (24), the data body (EPD) which is encrypted using the decryption work keys (WK), in order to reproduce the digital data (21) including the decrypted data body (PD) and the corresponding header information (HD).

To achieve the above object, a computer program according to seventh aspect of the present invention is a program for controlling a computer to execute the above-described decryption method.

These objects and other objects and advantages of the present invention will become more apparent upon reading of the following detailed description and the accompanying drawings in which:
FIG. 1 is a block diagram showing an encryption/decryption system according to a first embodiment of the present invention;
FIG. 2 is a diagram for explaining a format of digital data processed by the encryption/decryption system 116 shown in FIG. 1;
FIG. 3 is a diagram for explaining a process for generating work keys used when data is encrypted;
FIG. 4 is a diagram for explaining a process performed by an encryption block 104;
FIG. 5 is a diagram for explaining a process for generating work keys used when data is decrypted;
FIG. 6 is a diagram for explaining a process performed by a decryption block 108;
FIG. 7 is a diagram for explaining a process for generating work keys for decryption, in a case where digital data is falsified;
FIG. 8 is a block diagram showing a structure of an encryption/decryption system according to a second embodiment of the present invention.
FIG. 9 is a diagram schematically showing a format of an MPEG2 transport stream to be processed by the encryption/decryption system 116A shown in FIG. 8;
FIG. 10 is a diagram for explaining a process for generating work keys in the encryption/decryption system 116;
FIG. 11 is a diagram for explaining a process performed by the encryption block 104;
FIG. 12 is a block diagram showing an example of a structure of a work key generation block 102 or 107;
FIG. 13 is a block diagram showing a schematic structure of an encryption/decryption system according to a third embodiment of the present invention; and
FIG. 14 is a diagram showing formats of a transport packet before and after being encrypted by the encryption/decryption system 116 shown in FIG. 13.

An encryption/decryption system according to a first embodiment of the present invention will now be explained with reference to the drawings.

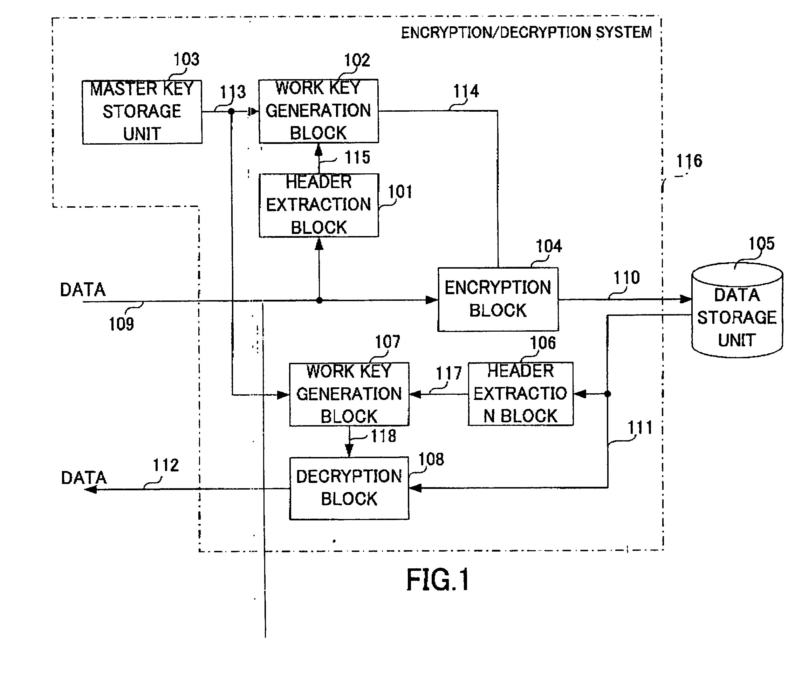

An encryption/decryption system 116 according to the first embodiment of the present invention comprises a header extraction block 101, a work key (encryption key) generation block 102, a master key storage unit 103, an encryption block 104, a header extraction block 106, a work key (decryption key) generation block 107, and a decryption block 108, as shown in FIG. 1.

Digital data to be processed is input to the encryption/decryption system 116 from another processing system through a data path (data stream) 109. Digital data processed by the encryption/decryption system 116 is output to another processing system through a data path 112.

A data storage unit 105 is connected to the encryption/decryption system 116. The data storage unit 105 is constituted by a hard disk, a memory, or the like, and receives encrypted digital data processed by the encryption/decryption system 116 through a data path 110, and stores the received encrypted digital data.

Digital data stored in the data storage unit 105 is read out form it and supplied to the encryption/decryption system 116 through a data path 111.

The header extraction block 101 of the encryption/decryption system 116 extracts headers (or header information) from the digital data to be processed which is input through the data path 109. The header extraction clock 101 outputs the extracted headers to the work key generation block 102 through a header data path 115.

The master key storage unit 103 is constituted by a flash ROM or the like. The master key is unique to each encryption/decryption system 116. The master key storage unit 103 stores master key information necessary for encryption and decryption. The master key storage unit 103 outputs master key information to the work key generation blocks 102 and 107 through master key paths 113.

The work key generation block 102 receives headers (or header information, header data) from the header extraction block 101 through the header data path 115. Further, the work key generation block 102 receives the master key information from the master key storage unit 103 through the master key path 113. The work key generation block 102 generates a work key necessary for encrypting the input digital data, using the headers extracted by the header extraction block 101 and the master key information output from the master key storage unit 103. The work key generation block 102 outputs the generated work key to the encryption block 104 through a work key path 114.

The encryption block 104 receives digital data to be processed from another processing system through the data path 109, and receives the work key from the work key generation block 102 through the work key path 114. The encryption block 104 encrypts payloads of the digital data to be processed using the work key, and outputs the encrypted digital data to the data storage unit 105 through the data path 110.

The header extraction block 106 receives the encrypted data output from the data storage unit 105 through the data path 111, and extracts headers from the encrypted data. The header extraction block 106 outputs the extracted headers to the work key generation block 107.

The work key generation block 107 receives the headers of the encrypted data through a header data path 117, and receives a master key from the master key storage unit 103 through the master key paths 113. The work key generation block 107 generates work keys necessary for decryption by using the headers of the encrypted data and the master key. The work key generation block 107 outputs the generated work keys to the decryption block 108 through a work key path 118.

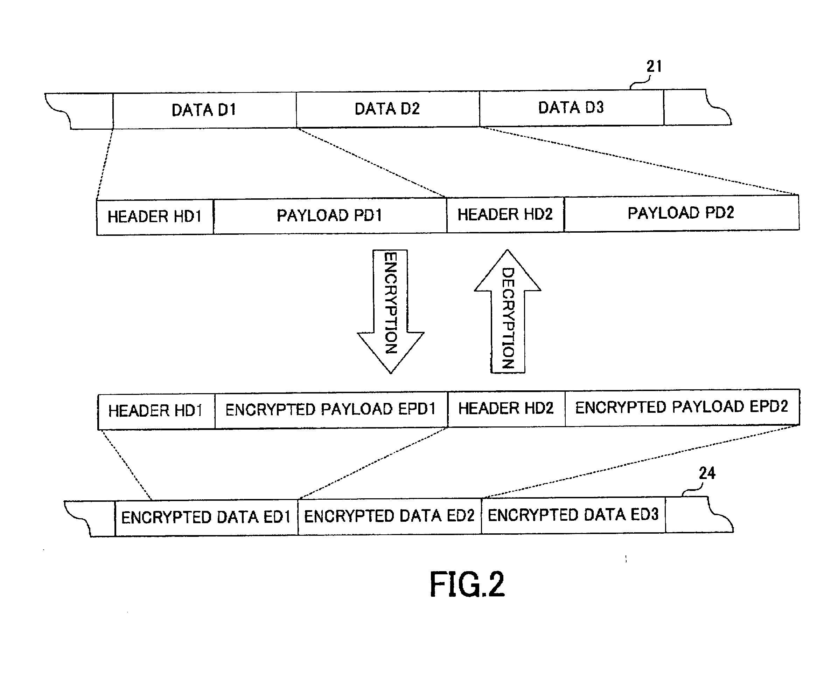

The decryption block 108 receives the work key from the work key generation block 107 through the work key path 118, and receives the encrypted data from the data storage unit 105 through the data path 111.
The decryption block 108 decrypts the received encrypted data using the work key, and outputs the decrypted digital data to another processing system through the data path 112. FIG. 2 is a diagram for explaining the format of the digital data 21 to be processed by the encryption/decryption system 116 and that of the encrypted digital data 24 processed by the encryption/decryption system 116.

As shown in FIG. 2, digital data 21 to be input to the encryption/decryption system 116 in the form of data stream through the data path 109 has a structure in which data (data block) D1, D2, D3, ... are supplied in this order. The data D1, D2, D3, ... respectively include a pair of a header HD1 and a payload (data body) PD2, a pair of a header HD2 and a payload (data body) PD2, a pair of a header PH3 and a payload (data body) PD3,...

The digital data 21 is encrypted by the encryption block 104 and converted into encrypted digital data 24 having a format shown in FIG. 2. As shown in FIG. 2, the encrypted digital data 24 has a structure in which encrypted data ED1, ED2, ED3,... are output in this order. The encrypted data ED1, ED2, ED3, ... respectively include a pair of an unencrypted header HD1 and an encrypted payload EPD1, a pair of an unencrypted header HD2 and an encrypted payload EPD2, a pair of an unencrypted header HD3 and an encrypted payload EPD3, as shown in FIG. 2.

Data stored in the data storage unit 105 and data output from the data storage unit 105 through the data path 111 both have the same structure as the encrypted digital data 24.

Further, digital data decrypted by the decryption block 108 and output from the encryption/decryption system 116 through the data path 112 has the same structure as the digital data 21.

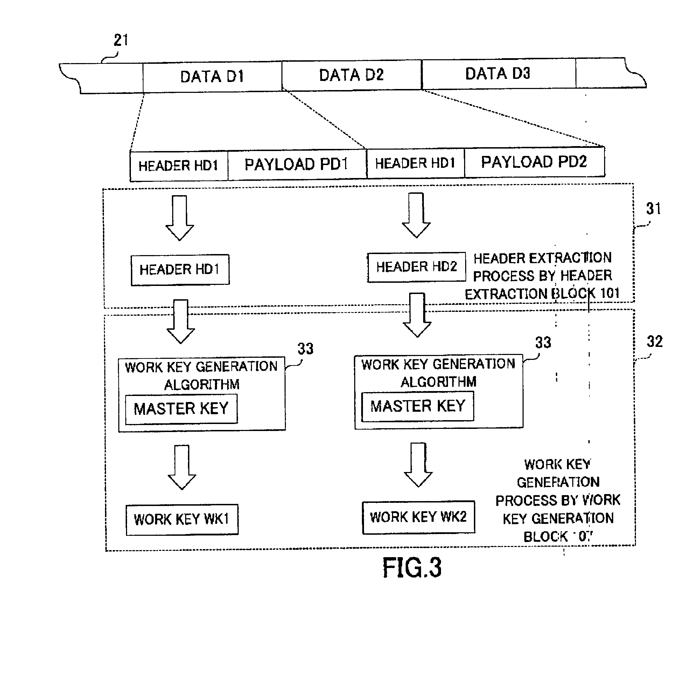

FIG. 3 is a diagram for explaining procedures for generating the work keys for encryption.

When the stream of the digital data 21 shown in FIG. 3 is supplied through the data path 109 to the encryption/decryption system 116, the header extraction block 101 performs a header extraction process 31 to extract the headers HD1, HD2, HD3, ... included in the data D1, D2, D3, ... contained in the digital data 21. The header extraction block 101 outputs the extracted headers HD1, HD2, HD3, ... to the work key generation block 102.

The work key generation block 102 performs a work key generation process 32 shown in FIG. 3 to generate work keys WK1, WK2, WK3, ... in accordance with a work key generation algorithm 33 using a master key and each of the headers HD1, HD2, HD3, ... The work key generation algorithm 33 is arbitrary. For example, the data of the headers may be converted into data having the same bit number as that of the master key by using an arbitrary function (for example, a hash function), and the exclusive or of the converted headers and the master key may be obtained. Further, the headers may not be fully used, but may be partially used.

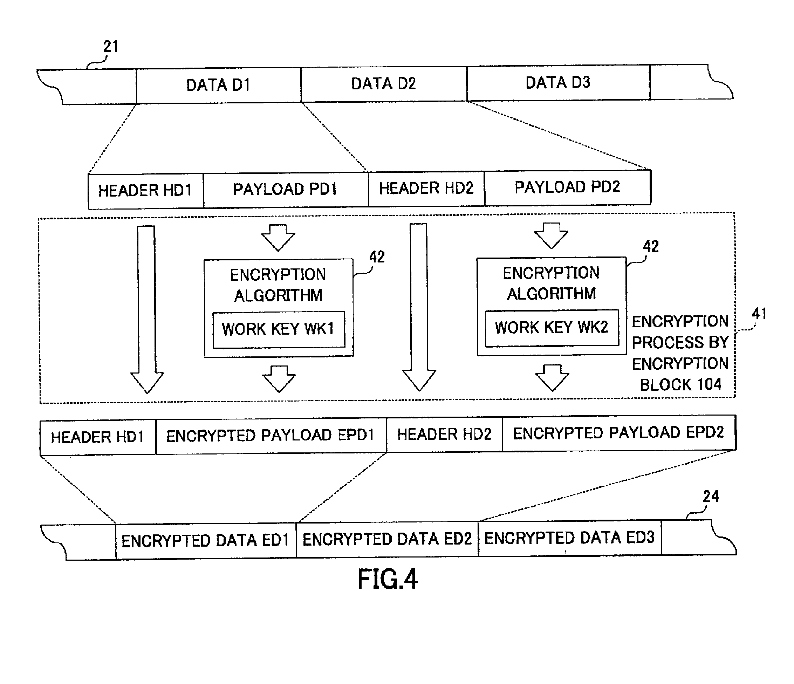

FIG. 4 is a diagram for explaining a process performed by the encryption block 104. As shown in FIG. 4, the encryption block 104 performs an encryption process 41, but simply outputs the headers HD1, HD2, HD3, ... of the data D1, D2, D3, ... included in the digital data 21 without encrypting them. On the other hand, the encryption block 104 encrypts the payloads PD1, PD2, PD3, ... in accordance with an encryption algorithm 42 of the encryption block 104, using the work keys WK1, WK2, WK3, ... generated for the data D1, D2, D3, ... respectively, and outputs the encrypted payloads EPD1, EPD2, EPD3.... The headers HD1, HD2, HD3, ... and the encrypted payloads EPD1, EPD2, EPD3... constitute encrypted data ED1, ED2, ED3..., respectively.

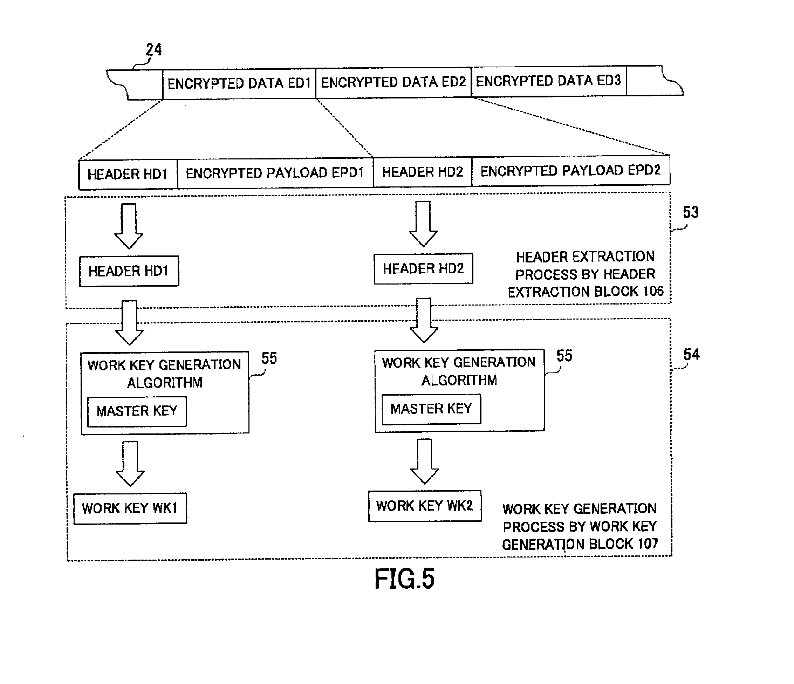

FIG. 5 is a diagram for explaining processes performed by the header extraction block 106 and the work key generation block 107. As shown in FIG. 5, the encrypted digital data 24 is supplied from the data storage unit 105 in the form of the data stream to the encryption/decryption system 116. The header extraction block 106 performs a header extraction process 53 to extract the headers HD1, HD2, HD3, ... of the encrypted data ED1, ED2, ED3, ... included in the encrypted digital data 24, and outputs the extracted headers to the work key generation block 107.

The work key generation block 107 performs a work key generation process 54 to generate work keys WK1, WK2, WK3, ... in accordance with a work key generation algorithm 55 by using a master key and the headers HD1, HD2, HD3, ... The work key generation algorithm 55 is the same as the work key generation algorithm 33.

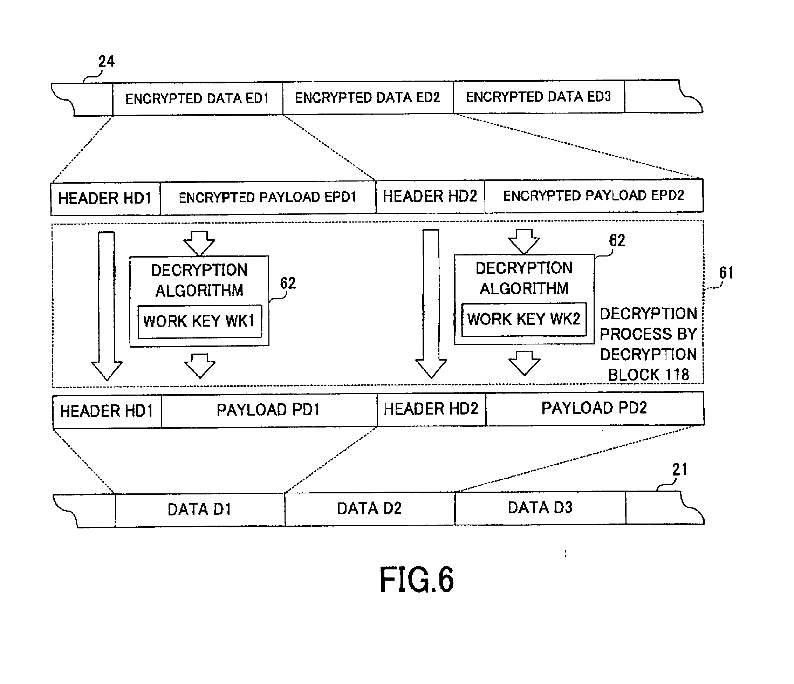

FIG. 6 is a diagram for explaining a process performed by the decryption block 108. As shown in FIG. 6, the decryption block 108 performs a decryption process 61, however simply outputs the headers HD1, HD2, HD3, ... of the encrypted data ED1, ED2, ED3, ... included in the encrypted digital data 24. On the other hand, the decryption block 108 decrypts the encrypted payloads EPD1, EPD2, EPD3, ... using the work keys WK1, WK2, WK3, ... in accordance with a decryption algorithm 62. Thereby, the decryption block 108 restores the payload PD1, PD2, PD3, ..., and outputs them. As a result, the original digital data 21 is restored.

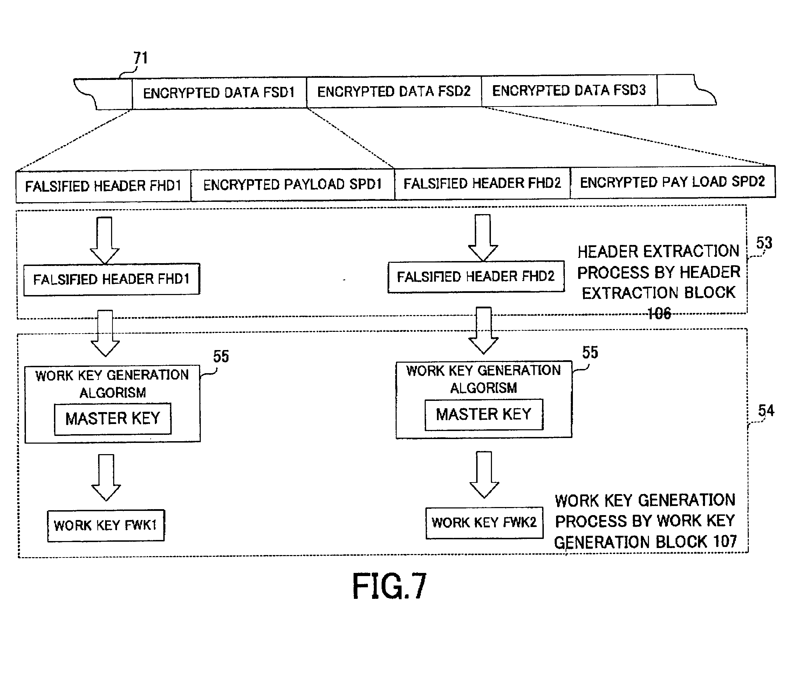

FIG. 7 is a diagram for explaining a process for generating work keys for decryption, in a case where the encrypted digital data 24 is falsified.

Here, digital data 71 which is the encrypted digital data 24 whose headers HD1, HD2, HD3, ... are falsified will be considered.

The header extraction block 106 performs the header extraction process 53, and thereby extracts falsified headers FHD1, FHD2, FHD3, ...

The work key generation block 107 performs the work key generation process 54 using a master key and the falsified headers FHD1, FHD2, FHD3, ... in accordance with the work key generation algorithm 55, and thereby generates work keys FWK1, FWK2, FWK3, ...

Next, an encryption operation and a decryption operation of the encryption/decryption system 116 shown in FIG. 1 will be explained with reference to FIG. 2 to FIG. 7.

The digital data 21 having the structure shown in FIG. 2 is input to the encryption/decryption system 116, in the form of the data stream, shown in FIG. 1 through the data path 109.

The header extraction block 101 performs header extraction process 31 to extract the headers HD1, HD2, HD3, ... included in the data D1, D2, D3, ... of the input digital data 21 as shown in FIG. 3, and outputs the extracted headers to the work key generation block 102 through the header data path 115. The work key generation block 102 performs the work key generation process 32 to generate work keys WK1, WK2, WK3, ... necessary for encrypting the payloads PD1, PD2, PD3, ... included in the data D1, D2, D3, ... That is, the work key generation block 102 generates the work keys WK1, WK2, WK3, ... by processing a master key and the headers HD1, HD2, HD3, ... included in the data D1, D2, D3, ... in accordance with the work key generation algorithm 33. The work keys WK1, WK2, WK3, ... generated in this manner are sequentially output to the encryption block 104 through the work key path 114.

The encryption block 104 performs the encryption process 41 shown in FIG. 4 to simply output the headers HD1, HD2, HD3, ... included in the sequentially supplied data D1 D2, D3, ... , and to encrypt the payloads PD1, PD2, PD3, ... using the work keys WK1, WK2, WK3, ... to generate and output encrypted payload EPD1, EPD2, EPD3, ... As a result, the encrypted digital data 24 including encrypted data ED1 made up of the unchanged header HD1 and the encrypted payload EPD1, encrypted data ED2 made up of the unchanged header HD2 and the encrypted payload EPD2, encrypted data ED3 made up of the unchanged header HD3 and the encrypted payload EPD3, ... is generated.

The encrypted digital data 24 which is encrypted by the encryption process 41 performed by the encryption block 104 is output to the data storage unit 105 through the data path 110. The data storage unit 105 stores the supplied encrypted digital data 24.

As described above, encryption of the digital data 21 is performed by generating the work keys WK1, WK2, WK3, ... using the headers HD1, HD2, HD3, ... of the data D1, D2, D3, ...

Next, an operation for decrypting and outputting data stored in the data storage unit 105 will be explained.

Let it be assumed that the encrypted digital data 24 shown in FIG. 2 is supplied from the data storage unit 105 to the encryption/decryption system 116.

The header extraction block 106 performs the header extraction process 53 shown in FIG. 5 to sequentially extract the headers HD1, HD2, HD3, ... of the encrypted data ED1, ED2, ED3, ..., and outputs the extracted headers to the work key generation block 107.

The work key generation block 107 performs the work key generation process 54 to sequentially generate work keys WK1, WK2, WK3, .., using the headers HD1, HD2, HD3, ... and a master key in accordance with the work key generation algorithm 55. The generated work keys WK1, WK2, WK3, ... are sequentially output to the decryption block 108 through the work key path 118.

The work key generation algorithm 55 is the same as the work key generation algorithm 33 used in encryption, and the headers HD1, HD2, HD3, ... and the master key are identical with those used in encryption. Accordingly, the generated work keys WK1, WK2, WK3, ... have the same values as the work keys WK1, WK2, WK3, ... used in encryption.

The decryption block 108 performs the decryption process 61 shown in FIG. 6 to simply output the header HD1 of the encrypted data ED1, and decrypt the encrypted payload EPD1 using the work key WK1 and output the decrypted payload. Next, the decryption block 108 simply outputs the header HD2 of the encrypted data ED2, and decrypts the encrypted payload EPD2 using the work key WK2 and outputs the decrypted payload. The decryption block 108 repeats the same operation for the following data.

The work keys WK1, WK2, WK3, ... used for decrypting the encrypted data ED1, ED2, ED3, ... are the same as the work keys WK1, WK2, WK3 used for encryption. Therefore, the encrypted data ED1, ED2, ED3, ... can be properly decrypted and the original data D1, D2, D3, ... can be obtained. The data D1, D2, D3, ... decrypted by the decryption block 108 are output to another processing system through the data path 112.

Next, an operation of the encryption/decryption system 116 in a case where the headers of the encrypted digital data 24 is falsified will be explained.

Here, let it be assumed that digital data 71 shown in FIG. 7, which is the encrypted digital data 24 whose headers is falsified is output from the data storage unit 105. This falsified digital data 71 is supplied to the header extraction block 106.

The header extraction block 106 performs the header extraction process 53 to extract the falsified headers FHD1, FHD2, FHD3, ... of the falsified encrypted data FED1, FED2, FED3, ..., and outputs the extracted headers to the work key generation block 107.

The work key generation block 107 performs the work key generation process 54 to process a master key supplied from the master key storage unit 103 and the falsified headers FHD1, FHD2, FHD3, ... supplied from the header extraction block 106 in accordance with the work key generation algorithm 55, thereby generating work keys FWK1, FWK2, FWK3, ... The generated work keys FWK1, FWK2, FWK3, ... take different values from those of the work keys WK1, WK2, WK3, ... used at the time of encryption, since the falsified headers FHD1, FHD2, FHD3, ... are different from the headers HD1, HD2, HD3, ... used at the time of encryption. The work key generation block 107 supplies the generated work keys FWK1, FWK2, FWK3, ... to the decryption block 108.

The decryption block 108 decrypts the encrypted payloads EPD1, EPD2, EPD3, ... using the supplied work keys FWK1, FWK2, FWK3, ... However, since the generated work keys FWK1, FWK2, FWK3, ... are different from the work keys WK1, WK2, WK3, ... used at the time of encryption, the payloads PD1, PD2, PD3 can not be properly restored.

As described above, the encryption/decryption system 116 according to the present embodiment uses not only a master key, but also headers in order to generate work keys. This means that the respective payloads will be encrypted using work keys different from one another. Therefore, even if a plurality of payloads are encrypted using the same encryption algorithm and the same master key, work keys used for encrypting the payloads are different payload by payload. That is, the encryption scheme is different data by data.

In a case where data are encrypted by a single master key, there is a possibility that the encryption algorithm will be deciphered by analyzing a mass of data. However, according to the encryption/decryption system 116 according to the present embodiment, since each data has its own work key prepared, the encryption algorithm is not easy to reveal.

Further, in a case where the header of the digital data after being encrypted is falsified, the payloads can not be decrypted since it is impossible to generate work keys identical with the work keys used in encryption. Therefore, if digital data is falsified, this digital data can no longer be used.

Next, an embodiment where the encryption/decryption system of the present invention is applied to an encryption/decryption process for an MPEG (Moving Picture Experts Group) 2 transport stream will be explained.

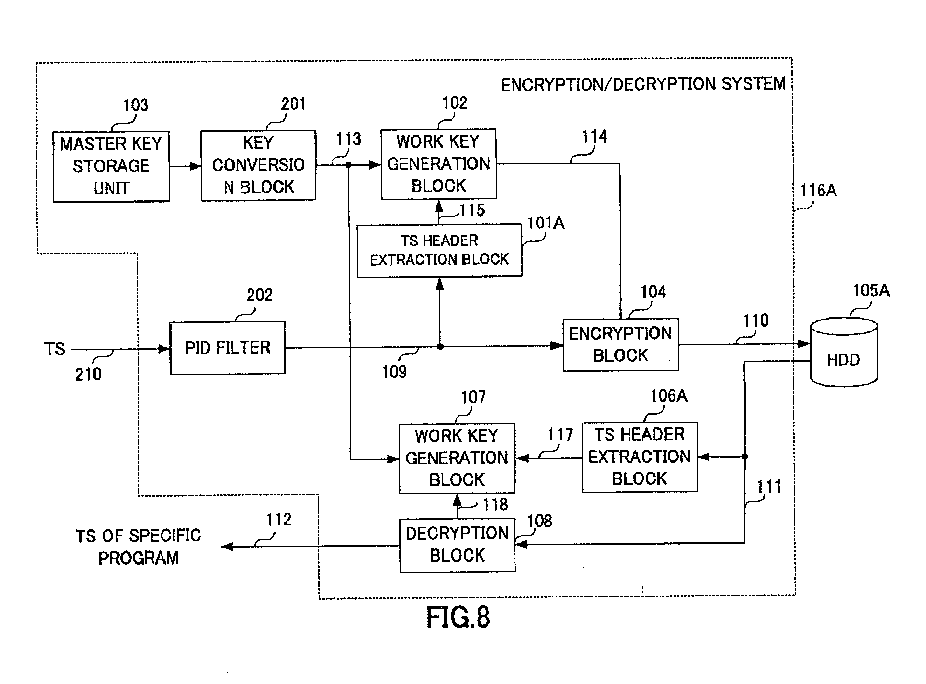

FIG. 8 is a block diagram showing the structure of an encryption/decryption system 116A according to a second embodiment.

The basic structure of the encryption/decryption system 116A according to the present embodiment is the same as the encryption/decryption system 116 shown in FIG. 1. However, the encryption/decryption system 116A has the following features different from the system shown in FIG. 1, in order to record and reproduce an MPEG2 transport stream (TS).

First, the encryption/decryption system 116A comprises a key conversion block 201 and a PID filter 202. Further, the encryption/decryption system 116A comprises a TS header extraction blocks 101A and 106A instead of the header extraction blocks 101 and 106.

The key conversion block 201 is connected between the master key storage unit 103 and the work key generation blocks 102 and 107. The key conversion block 201 converts a master key output from the master key storage unit 103 into another key using a secret algorithm in order to enhance security.

The FID filter 202 extracts transport packets of a specific program having a specific PID (Packet IDentifier) from an input transport stream, and outputs the extracted transport packets to the TS header extraction block 101A and the encryption block 104 through the data path 109 as a transport stream of the specific program.

The TS (Transport Stream) header extraction block 101A extracts headers from the transport stream of the specific program, and outputs the extracted headers to the work key generation block 102 through the header data path 115.

The TS header extraction block 106A extracts the headers of the encrypted transport stream of the specific program, which is received through the data path 111. The extracted headers are output to the work key generation block 107 through the header data path 117.

Next, a general operation of the encryption/decryption system 116A having the above-described structure will be explained.

A master key output from the master key storage unit 103 is converted by the key conversion block 201 to a converted master key and output to the work key generation block 102 and the work key generation block 107 through the master key paths 113.

The transport stream TS is input to this encryption/decryption system 116A from an external apparatus. The PID filter 202 extracts transport packets of a specific program having a specific PID from the input transport stream, and outputs the extracted transport packets to the TS header extraction block 101A and the encryption block 104 through the data path 109 as a transport stream of the specific program.

The header extraction block 101A extracts headers from the transport stream TS of the specific program, and outputs the headers to the work key generation block 102 through the header data path 115.

The work key generation block 102 generates work keys using the converted master key received through the master key path 113 and the headers received through the header data path 115, and outputs the generated work keys to the encryption block 104 through the work key path 114.

The encryption block 104 uses the work keys received through the work key path 114 as encryption keys, and encrypts the transport stream of the specific program received through the data path 109.

The encrypted transport stream of the specific program is output through the data path 110 to a hard disk (HDD) 105A as the data storage unit 105, to be stored and cumulated therein.

The encrypted transport stream of the specific program, which is stored in the hard disk 105A, is output through the data path 111 to the TS (transport stream) header extraction block 106A and to the decryption block 108.

The TS header extraction block 106A extracts the headers from the encrypted transport stream of the specific program, which is output through the data path 111. The extracted headers are output to the work key generation block 107 through the header data path 117.

The work key generation block 107 generates work keys using the master key received through the master key path 113, and the headers received through the header data path 117, and outputs the work keys to the decryption block 108 through the work key path 118.

The decryption block 108 decrypts the encrypted transport stream of the specific program using the work keys received through the work key path 118, and outputs the decrypted transport stream to another processing system through the data path 112.

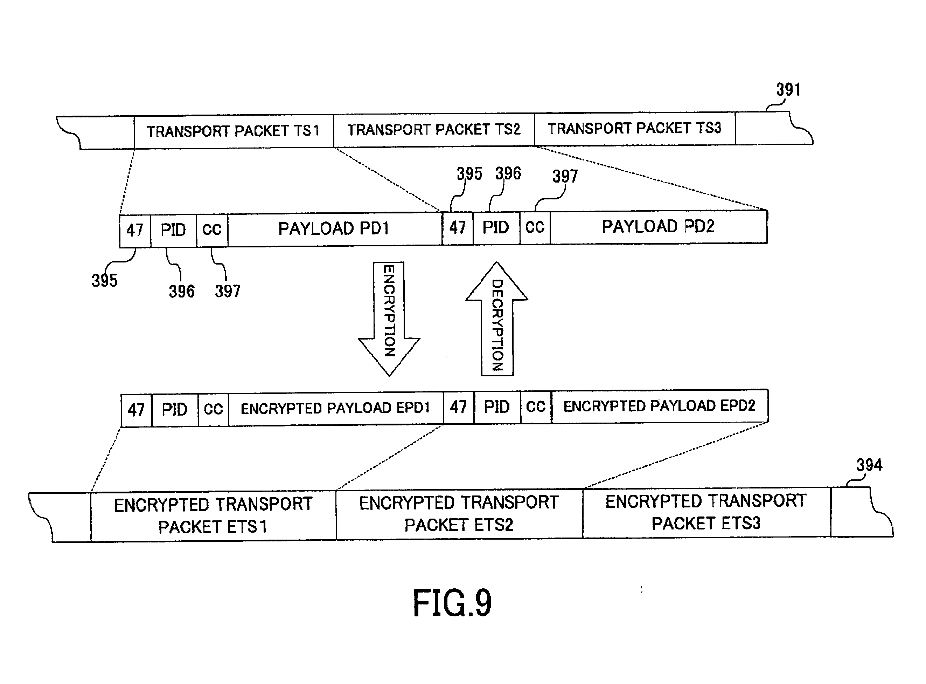

FIG. 9 is a diagram schematically showing the format of the MPEG2 transport stream to be processed by the encryption/decryption system 116A shown in FIG. 8.

As shown in FIG. 9, a transport stream 391 includes a transport packet TS1, a transport packet TS2, a transport packet TS3, ...

Each transport packet TSi ("i" is a suffix) includes three kinds of headers and a payload (data body) PD. The three kinds of headers includes, 47 headers 395, a PID 396 including information regarding a program number, and a CC 397 including a Cyclic Counter value which is changed in accordance with a packet order so as to confirm the continuation of packets having the same PID information. The CC 397 of the transport packet TS1 and the CC 397 of the transport packet TS2 include different values from each other, for example.

An encrypted transport stream 394 includes an encrypted transport packet ETS1, an encrypted transport packet ETS2, an encrypted transport packet ETS3...

Each encrypted transport packet includes three kinds of headers and an encrypted payload EPD. The thee kinds of headers are, 47 headers 395, a PID 396 including information regarding a program number, and a CC 397 including a Cyclic Counter value which is changed in accordance with a packet order to confirm the continuation of packets having the same PID information.

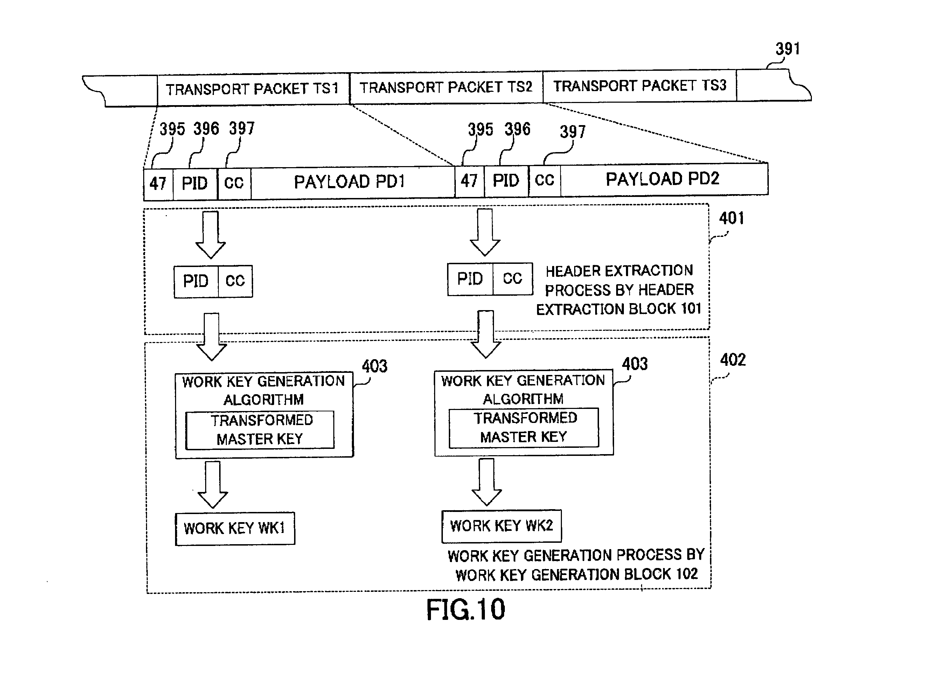

FIG. 10 is a diagram for explaining a process in which work keys are generated in the encryption/decryption system 116A.

As shown in FIG. 10, the TS header extraction block 101A performs a TS header extraction process 401, and extracts the headers PID 396 and CC 397 of the transport packet TS1, extracts the headers PID 396 and CC 397 of the transport packet TS2, and repeats the same operation for the following packets. Here, in a case where the PID 396 of the transport packet TS1 and the PID 396 of the transport packet TS2 are the same, the value of the CC 397 of the transport packet TS1 and the value of the CC 397 of the transport packet TS2 necessarily take different values.

The work key generation block 102 performs a work key generation process 402, and generates work keys by applying a work key generation algorithm 403 to the value of the extracted PID 396 and the value of the extracted CC 397. That is, the work key generation block 102 generates a work key WK1 based on the PID 396 and the CC 397 of the transport packet TS1, generates a work key WK2 based on the PID 396 and the CC 397 of the transport packet TS2, and repeats the same operation for the following packets. As described above, since the CC 397 of the transport packet TS1 and the CC 397 of the transport packet TS2 are different, the work key WK1 and the work key WK2 result in having different values.

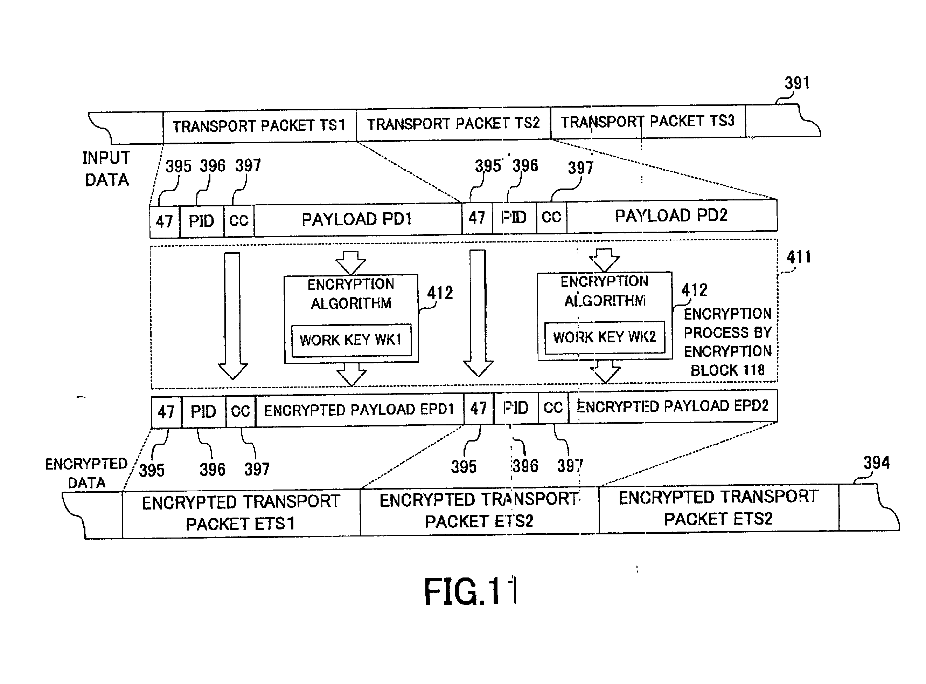

FIG. 11 is a diagram for explaining the process performed by the encryption block 104.

The encryption block 104 performs an encryption process 411, and simply outputs the headers (47 headers 395, PID 396, CC 397) of each of the transport packets TS1, TS2, TS3, ...as they are.

On the other hand, the encryption block 104 encrypts the payload PD1 of the transport packet TS1 in accordance with an encryption algorithm 412 using the work key WK1, and outputs the encrypted payload EPD1. Further, the encryption block 104 encrypts the payload PD2 of the transport packet TS2 in accordance with the encryption algorithm 412 using the work key WK2, and outputs the encrypted payload EPD2. The encryption block 104 repeats the same operation for the following payloads. Thereby, an encrypted transport packet ETS1 including the header and the encrypted payload EPD1, an encrypted transport packet ETS2 including the header and the encrypted payload EPD2, ...are obtained.

Next, the processes performed by the encryption/decryption system 116A will be explained.

A transport stream TS is input to the encryption/decryption system 116 through the input port 210. Among transport packets included in the input transport stream TS, transport packets having a specific PID are extracted by the PID filter 202, and are flowed to the data path 109.

As explained above with reference to FIG. 10, the TS header extraction block 101A performs the TS header extraction process 401 to extract the PID 396 and CC 397 of the transport packet TS1 flowed through the data path 109, extract the PID 396 and CC 397 of the transport packet TS2, and extract the PID 396 and CC 397 of each of the following transport packets in the same way. As described above, in a case where the transport packet TS1 and the transport packet TS2 have the same PID, the value of the CC 397 of the transport packet TS1 and the value of the CC 397 of the transport packet TS2 inevitably take different values.

The work key generation block 10 performs the wok key generation process 402 to generate work keys using the values of the extracted PID 396 and CC 397 in accordance with the work key generation algorithm 403, and outputs the generated work keys to the encryption block 104 through the work key path 114. Since the CC 397 of the transport packet TS1 and the CC 397 of the transport packet TS2 take different values, the work key WK1 for the transport packet TS1 and the work key WK2 for the transport packet TS2 take different values even if the same algorithm and the same converted master key are used in the work key generation process 402.

The transport packets TS1, TS2, ... are input to the encryption block 104 in this order. The encryption block 104 performs an encryption process 411 to simply outputs the headers (47 header 395, PID 396, CC 397) of the transport packet TS1, and then, encrypts the payload PD1 using the work key WK1 to generate an encrypted payload EPD1, and outputs the generated encrypted payload EPD1. Likewise, the encryption block 104 simply outputs the headers of the transport packet TS2, and the encrypts the payload PD2 using the work key WK2 and outputs the encrypted payload EPD2. The same process is repeated for the transport packet TS3, and transport packets thereafter.

The encrypted transport stream which is generated by the encryption process 411 of the encryption block 104 is output through the data path 110 to the hard disk 105A and stored therein.

By generating work keys based on the PIDs 396 and CCs 397 of the respective transport packets as described above, it is possible to sufficiently secure the variation of the work keys.

In a case where only the PID 396 is used for generating work keys, only one key is prepared for a specific program. Further, in a case where work keys are generated using only the CC 397, the variation of work keys is narrowed. This is because, since the CC 397 is a value changed by the cyclic counter, the digital data to be encrypted by the encryption/decryption system 116 is encrypted using work keys which are changed cyclically.

Accordingly, by generating work keys using the headers PID 396 and CC 397, it is possible to sufficiently broaden the variation of the work keys.

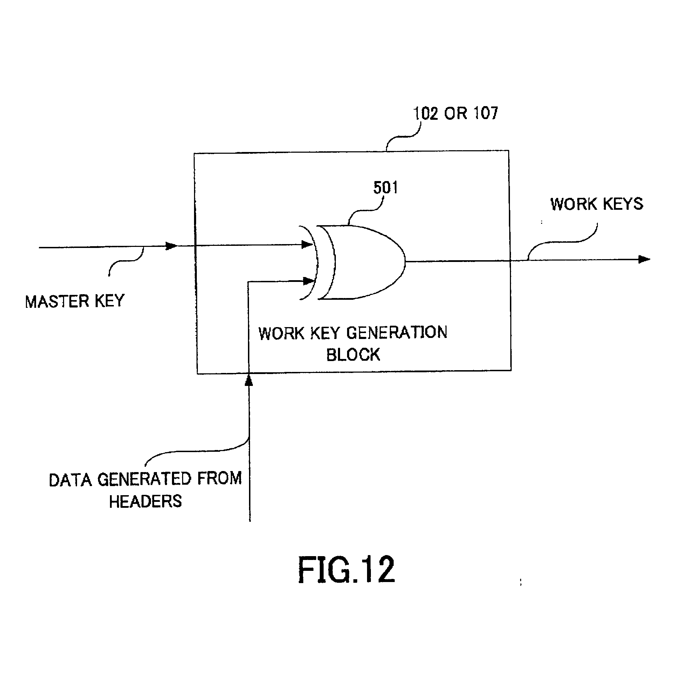

The work key generation block 102 and the work key generation block 107 shown in FIG. 1 and FIG. 8 are constituted by, for example, an exclusive or circuit 501 as shown in FIG. 12.

In a case where the work key generation block 102 shown in FIG. 1 is constituted by the exclusive or circuit 501, the exclusive or circuit 501 generates work keys for encryption by obtaining the exclusive or of the master key supplied from the master key storage unit 103 through the master key path 113 and data which is generated from the headers supplied from the header extraction block 101 by using, for example, one-way function, and outputs the generated work keys to the work key path 114.

Likewise, in a case where the work key generation block 107 shown in FIG. 1 is constituted by the exclusive or circuit 501, the exclusive or circuit 501 generates work keys for description by obtaining the exclusive or of the master key supplied from the master key storage unit 103 and data generated from the headers supplied from the header extraction block 106 by using the one-way function, and outputs the generated work keys through the work key path 118.

Further, in a case where the work key generation block 102 shown in FIG. 8 is constituted by the exclusive or circuit 501, the exclusive or circuit 501 generates work keys by obtaining the exclusive or of a converted master key supplied from the key conversion block 201 and data generated from the headers supplied from the TS header extraction block 101A, and outputs the generated work keys through the work key path.

Likewise, in a case where the work key generation block 107 shown in FIG. 8 is constituted by the exclusive or circuit 501, the exclusive or circuit 501 generates work keys for decryption by obtaining the exclusive or of a converted master key supplied from the key conversion block 201 and data generated from the headers supplied from the TS header extraction block 106A.

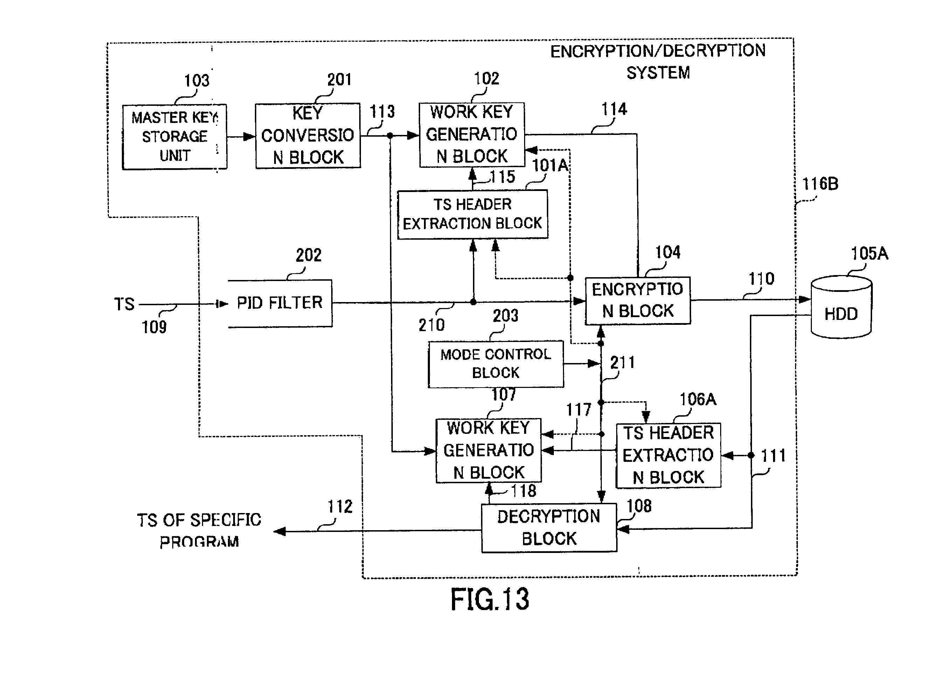

FIG. 13 is a block diagram showing s schematic structure of a third embodiment of the encryption/decryption system according to the present invention.

The encryption/decryption system 116B according to the present embodiment is a modified example of the encryption/decryption system 116A shown in FIG. 8. As compared to FIG. 8, the different point is that a mode control block 203 is added between the encryption block 104 and the decryption block 108. The mode control block 203 designates an encryption range (encryption area) and a decryption range (decryption area) for the encryption block 104 and the decryption block 108 respectively, and notifies the determinations to the encryption block 104 and the decryption block 108 respectively through a mode control signal 211.

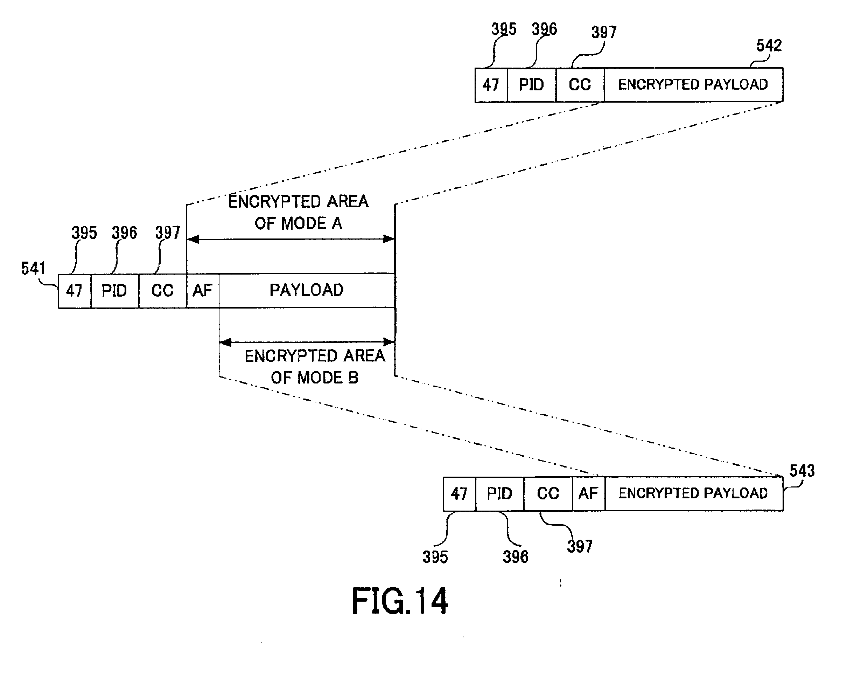

The mode control block 203 has two encryption modes, namely, a mode A and a mode B. As shown in FIG. 14, the mode A is for generating an encrypted payload 542 by encrypting the AF (Adaptation Field) and the payload of an original transport packet 541, and the mode B is for generating an encrypted payload 543 by encrypting the payload of the original transport packet 541.

Next, with reference to FIG. 14, an operation of the mode control block 203 will be explained.

In a case where the mode A is selected for encrypting the transport packet 541, encryption is performed by regarding the payload and AF of the transport packet 541 as the range (data body) that should be encrypted. The AF of the transport packet 541 is an adaptation field prepared by expanding the header, and includes time information.

Next, in a case where the mode B is selected, encryption is performed by regarding the payload of the transport packet 541 as the range (data body) that should be encrypted, thereby an encrypted transport packet 543 is generated.

In this manner, it is possible to select the mode A when the AF information is to be encrypted, and to select the mode B when the AF information is not to be encrypted. Therefore, the range that should be encrypted can be arbitrarily controlled. The way to select a mode is arbitrary. For example, the mode control block 203 may select a mode in accordance with an externally supplied signal. Or, the mode control block 203 may select a mode in accordance with a PID of packets to be encrypted or decrypted flowing on the path 210 or 111.

The above explanation concerns an integral encryption/decryption system. However, the present invention is not limited to this, but can be applied to a single body of encryption system and a single body of decryption system.

In the explanation of FIG. 14, the modes A and B are for changing the ranges of encryption and decryption. However, the mode A and B may also be for changing the ranges used for generating work keys. For example, in case of the mode A, the PID 396 and CC 397 in the headers are used for generating encryption work keys. In case of the mode B, the PID 396, CC397, and AF in the headers are used for generating encryption work keys. In this case, the ranges used for generating work keys may be changed in accordance with the modes A and B, unlike the above explanation of FIG. 14 where the ranges for encryption and decryption are changed. For example, in case of the mode A, the PID 396 and CC 397 in the headers are used for generating encryption work keys. In case of the mode B, the PID 396, CC 397 and AF in the headers are used for generating encryption work keys. In this case, mode control information is supplied to the TS header extraction blocks 101A and 106A and to the work key generation blocks 102 and 107.

The present invention is not limited to the above described embodiment, but can be modified and applied in various ways. For example, the present invention can be applied to a system which does not store encrypted data in the data storage unit 105, but transmits the encrypted data.

The above-descried encryption/decryption processes may be executed by a computer, a CPU (central processing unit), and a DSP (digital signal processor). For this purpose, a program or program signal for controlling a computer, a CPU, and a DSP may be distributed by storing it on a recording medium such as a CD-ROM, DVD etc., or may be transmitted through a network in form of a data signal by embodying it in a carrier wave.

Various embodiments and changes may be made thereunto without departing from the broad spirit and scope of the invention. The above-described embodiments are intended to illustrate the present invention, not to limit the scope of the present invention. The scope of the present invention is shown by the attached claims rather than the embodiments. Various modifications made within the meaning of an equivalent of the claims of the invention and within the claims are to be regarded to be in the scope of the present invention.

## Claims

1. An encryption/decryption system for encrypting/decrypting digital data (21) including header information (HD) and a data body (PD), said system **characterized by** comprising:
an encryption work key generation unit (101, 102) which generates an encryption work key (WK) based on the header information (HD) of the digital data (21);
an encryption unit (104) which, as to the digital data (21), encrypts the data body (PD), using the encryption work key, and outputs the digital data;
a decryption work key generation unit (106, 107) which generates a decryption work key (WK) based on the header information (HD) of the digital data (21) encrypted by said encryption unit (104); and
a decryption unit (108) which, as to the digital data (24) encrypted by said encryption unit (104), decrypts the encrypted data body (EPD) using the decryption work key (WK), in order to reproduce the digital data (21) including the decrypted data body (PD) and the corresponding header information (HD).

2. The encryption/decryption system according to claim 1,
**characterized in that** the digital data (21) is data made up of a series of a plurality of data blocks (D) each including header information (HD) and a data body (PD), and the header information (HD) is unique to each data block (D),
said encryption work key generation unit (101, 102) generates an encryption work key (WK) for each data block based on the header information (HD) of the data block;
said encryption unit (104) encrypts the data body (PD) of each data block, using the encryption work key generated for the data block;
said decryption work key generation unit (106, 107) generates the decryption work key (WK) for each data block based on the header information (HD) of the encrypted data block; and
said decryption unit (108) decrypts the encrypted data body (EPD) of each data block using the decryption work key (WK) for the data block.

3. The encryption/decryption system according to claim 1 or 2,
**characterized in that**:
said encryption work key generation unit (101, 102) generates the encryption work key using all or a part of the header information extracted from the digital data (21) and a master key; and
said decryption work key generation unit (106, 107) generates the decryption work key using all or the part of the header information extracted from the encrypted digital data and the master key.

4. The encryption/decryption system according to claim 3.
**characterized in that** the master key is unique to each said encryption/decryption system.

5. The encryption/decryption system according to claim 3 or 4,
**characterized in that** said encryption work key generation unit (101, 102) and said decryption work key generation unit (106, 107) respectively generate the work keys by obtaining an exclusive or of the master key and the header information.

6. The encryption/decryption system according to claim 1,
**characterized in that**:
the digital data (21) is data made up of a series of data blocks (D) each including header information (HD) and a data body (PD);
said system further comprises a filter (202) which receives the digital data (21), extracts data blocks of a specific program based on the header information, and outputs the extracted data blocks;
said encryption work key generation unit (101A, 102) extracts the header information (HD) of the data block extracted by said filter (202), and generates the encryption work key (WK) based on the extracted header information; and
said encryption block (104) encrypts the data block (D) extracted by said filter (202).

7. The encryption/decryption system according to any one of claims 1 to 6,
**characterized in that**:
said digital data (71) is data based on MPEG and made up of a series of transport packets each including header information and a payload;
said system further comprises a filter (202) which receives the digital data (71), extracts transport packets of a specific program based on the header information (HD), and outputs the extracted transport packets;
said encryption work key generation unit (101A, 102) extracts the header information (HD) of the transport packets extracted by said filter (202), and generates encryption work keys (WK) based on the extracted header information (HD); and
said encryption unit (104) encrypts the transport packets extracted by said filter (202).

8. The encryption/decryption system according to claim 7,
**characterized in that**:
the header information (HD) includes PID header information containing information regarding a program number, and CC header information containing a cyclic count value which is changed in accordance with an order of transport packets to confirm continuation of transport packets; and
said encryption work key generation unit (101A, 102) generates the encryption work keys based on at least the PID header information and the CC header information.

9. The system according to any one of claims 1 to 8,
**characterized by** comprising an encryption range designation unit (203) which designates a range of data that should be encrypted, and notifies the designated range to said encryption unit (104) and said decryption unit (108).

10. The system according to any one of claims 1 to 9,
**characterized by** comprising a range designation unit (203) which designates a range used for generating the work key, and notifies the designated range to said encryption work key generation unit (101, 102) and said decryption work key generation unit (106, 107).

11. The system according to any one of claims 1 to 10,
**characterized in that**:
said encryption unit (104) outputs the header information (HD) of the digital data (24) as it is, encrypts the data body (EPD) using the encryption work key (WK) and outputs the encrypted data body, and thereby generates encrypted data including the original header information and the encrypted data body; and
said decryption unit (108) outputs the header information (HD) of the encrypted digital data (24) as it is, decrypts the encrypted data body (EPD) using the decryption work keys (WK) and outputs the decrypted data body, and thereby reproduces the original digital data.

12. An encryption system for encrypting digital data (21) including header information (HD) and a data body (PD), said system **characterized by** comprising:
an encryption work key generation unit (101, 102) which generates an encryption work key based on the header information (HD) of the digital data (21); and
an encryption unit (104) which, as to the digital data (21), encrypts the data body (PD) using the encryption work key, and outputs the digital data.

13. The encryption system according to claim 12, **characterized in that** the digital data (21) is data made up of a series of a plurality of data blocks (D) each including header information (HD) and a data body (PD), and the header information (HD) is unique to each data block (D),
said encryption work key generation unit (101, 102) generates an encryption work key (WK) for each data block based on the header information (HD) of the data block; and
said encryption unit (104) encrypts the data body (PD) of each data block using the encryption work key generated for the data block

14. The encryption system according to claim 12 or 13,
**characterized in that** said encryption work key generation unit (101, 102) generates the encryption work key using all or a part of the header information extracted from the digital data (21) and a master key.

15. The encryption system according to claim 14, **characterized in that** the master key is unique to each said encryption system.

16. The system according to claim 14 or 15, **characterized in that** said encryption work key generation unit (101, 102) generates the work keys by obtaining an exclusive or of the master key and the header information.

17. The system according to claim 12, 13, 14, 15 or 16,
**characterized in that**:
the digital data (21) is data made up of a series of data blocks (D) each including header information (HD) and a data body (PD);
said system further comprises a filter (202) which receives the digital data (21), extracts data blocks of a specific program based on the header information, and outputs the extracted data blocks;
said encryption work key generation unit (101A, 102) extracts the header information (HD) of the data block extracted by said filter (202), and generates the encryption work key (WK) based on the extracted header information; and
said encryption block (104) encrypts the data block (D) extracted by said filter (202).

18. The system according to claim 12, 13, 14, 15, 16 or 17,
**characterized in that**:
said digital data (71) is data based on MPEG and made up of a series of transport packets each including header information and a payload;
said system further comprises a filter (202) which receives the digital data (71), extracts transport packets of a specific program based on the header information (HD), and outputs the extracted transport packets;
said encryption work key generation unit (101A, 102) extracts the header information (HD) of the transport packets extracted by said filter (202), and generates encryption work keys (WK) based on the extracted header information (HD); and
said encryption unit (104) encrypts the transport packets extracted by said filter (202).

19. The encryption system according to claim 18,
**characterized in that**:
the header information (HD) includes PID header information containing information regarding a program number, and CC header information containing a cyclic count value which is changed in accordance with an order of transport packets to confirm continuation of transport packets; and
said encryption work key generation unit (101A, 102) generates the encryption work keys based on at least the PID header information and the CC header information.

20. The system according to any one of claims 12 to 19, comprising an encryption range designation unit (203) which designates a range of data that should be encrypted, and notifies the designated range to said encryption unit (104).

21. The system according to any one of claims 12 to 20, comprising a range determination unit (203) which designates a range used for generating the work key, and notifies the designated range to said encryption work key generation unit (101, 102).

22. The system according to any one of claims 12 to 21, wherein said encryption unit (104) simply outputs the header information (HD) of the digital data (24), outputs the data body (EPD) by encrypting it using the encryption work keys (WK), and thereby generates encrypted data including the original header information and the encrypted data body.

23. A decryption system for decrypting encrypted data of digital data (21) including header information (HD) and a data body (PD), **characterized by** comprising:
a decryption work key generation unit (106, 107) which generates a decryption work key (WK) based on the header information (HD) of the encrypted digital data (21); and
a decryption unit (108) which, as to the encrypted digital data (24), decrypts the data body (EPD) which is encrypted, using the decryption work key (WK), in order to reproduce the digital data (21) including the decrypted data body (PD) and the corresponding header information (HD)

24. The decryption system according to claim 23, **characterized in that** the digital data (21) is data made up of a series of a plurality of data blocks (D) each including header information (HD) and a data body (PD), and the header information (HD) is unique to each data block (D),
said decryption work key generation unit (106, 107) generates the decryption work key (WK) for each data block based on the header information (HD) of the encrypted data block; and
said decryption unit (108) decrypts the encrypted data body (EPD) of each data block using the decryption work key (WK) for the data block.

25. The decryption system according to claim 23 or 24, wherein said decryption work key generation unit (106, 107) generates the decryption work key using all or a part of the header information extracted from the encrypted digital data and a master key.

26. The decryption system according to claim 25, **characterized in that** the master key is unique to each said decryption system.

27. The decryption system according to claim 25 or 26, wherein said decryption work key generation unit (106, 107) generates the work keys by obtaining an exclusive or of the master key and the header information.

28. The system according to any one of claims 23 to 27, comprising a decryption range determination unit (203) which designates a range of data that should be decrypted, and notifies the designated range to said decryption unit (108).

29. The system according to any one of claims 23 to 28, comprising a range determination unit (203) which designates a range used for generating the work keys, and notifies the designated range to said decryption work key generation unit (106, 107).

30. The system according to claim 23 to 29, wherein said decryption unit (108) outputs the header information (HD) of the encrypted digital data (24) as it is, decrypts the encrypted data body (EPD) using the decryption work keys (WK) and outputs the decrypted data body, and thereby reproduces the original digital data.

31. An encryption method of encrypting digital data (21) including header information (HD) and a data body (PD), said method **characterized by** comprising:
generating an encryption work key (WK) based on the header information (HD) of the digital data (21); and
encrypting, as to the digital data (21), the data body (PD) using the encryption work key, and outputting the digital data.

32. A computer program for controlling a computer to execute the method according to claim 31.

33. A decryption method of decrypting encrypted data of digital data (21) including header information (HD) and a data body (PD), said method **characterized by** comprising:
generating decryption work key (WK) based on the header information (HD) of the encrypted digital data (21); and
decrypting, as to the encrypted digital data (24), the data body (EPD) which is encrypted using the decryption work key (WK), in order to reproduce the digital data (21) including the decrypted data body (PD) and the corresponding header information (HD).

34. A computer program for controlling a computer to execute the method according to claim 33.
